# EUROPEAN PATENT SPECIFICATION

(11) **EP 0 711 906 B1**
(45) Date of publication and mention of the grant of the patent: **26.04.2000**
(21) Application number: 95117804.5
(22) Date of filing: 10.11.1995
(51) Int. Cl.: F02B 31/08

(54) **Internal combustion engine**
Brennkraftmaschine
Moteur à combustion interne

(30) Priority: 10.11.1994 JP 27647994
(43) Date of publication of application: 15.05.1996
(73) Proprietor: YAMAHA HATSUDOKI KABUSHIKI KAISHA, Iwata-shi Shizuoka-ken, 438 (JP)
(72) Inventor: Aoyama, Tateo, Iwata-shi, Shizuoka-ken, 438 (JP); Nishigaki, Masato, Iwata-shi, Shizuoka-ken, 438 (JP); Hara, Takashi, Iwata-shi, Shizuoka-ken, 438 (JP); Wada, Masami, Iwata-shi, Shizuoka-ken, 438 (JP)
(74) Representative: Grünecker, Kinkeldey, Stockmair & Schwanhäusser Anwaltssozietät

(56) References cited:
- EP-A- 0 449 240
- EP-A- 0 499 268
- EP-A- 0 595 316
- EP-A- 0 640 754
- EP-A- 0 675 274
- DE-A- 3 609 693
- US-A- 4 617 896
- US-A- 4 667 636
- US-A- 5 119 784

## Description

This invention generally relates to an internal combustion engine of the four-cycle type comprising four-cycle engine air-intake control devices that generate intra-cylinder flows that stabilise combustion,for example, with lean air/fuel mixtures. More specifically the invention relates to an internal combustion engine comprising the features of the preamble portion of claim 1.

An internal combustion engine of the type mentioned above is known from US-A-5 119 784.

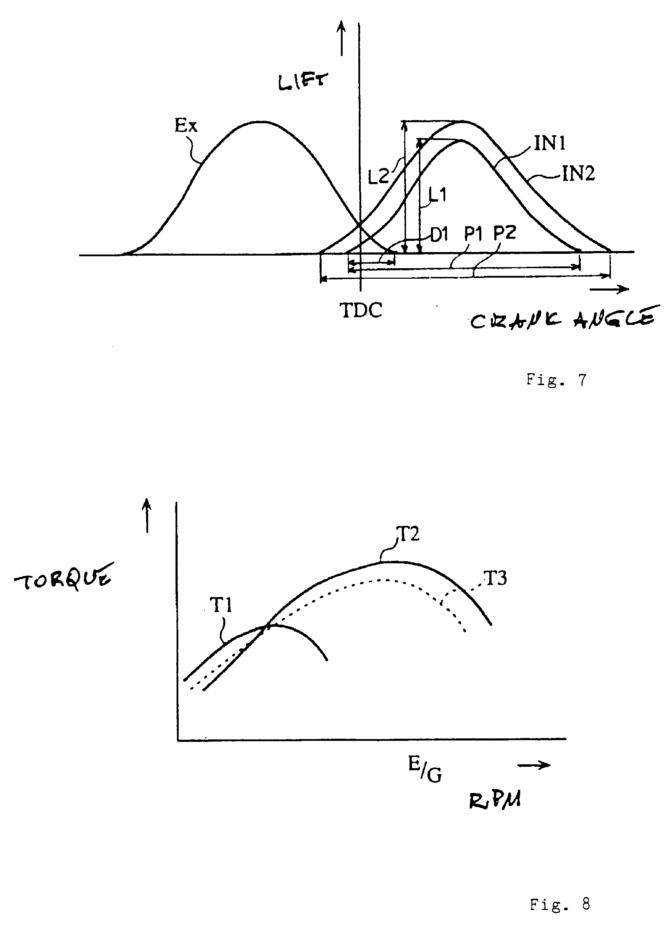

Generally, it is well known in engine design that multi-valve engines provide an increased output torque at high RPM compared with two-valve engines, but lack torque under low RPM as is shown by curve T2 in figure 8 of this application. Normally, the intake branches of a multi-valve engine are designed such as to avoid the generation of swirl in the intake ducts and the cylinder at high RPM because this would be detrimental to optimum air intake. On the other hand, the little generation of swirl under low RPM results in an inhomogeneous that is non-optimum intake charge which causes the torque under such conditions to be lower than in a two-valve engine

It would also be possible to increase the swirl under low RPM running conditions which would be detrimental to the output torque under high RPM conditions because of flow losses. This is shown by curve T1 in figure 8 of this application.

From the perspective of improving fuel economy and exhaust gas cleansing in four-cycle engines, proposals have been made to use lean air/fuel ratios (A/F) of 20 or greater. One way that is known to achieve stable combustion with such lean air/fuel ratios is to strengthen intra-cylinder flows, such as the tumbling action created by introducing the intake air into the cylinders so it now moves along the cylindrical axis, or the swirling action from introducing the intake air along the inside surface of the cylinders.

Prior art air intake control devices designed to generate the foregoing swirls, such as that in JP-A-5 133 234, use a valve to open and close one of the air intake ports in the case where each cylinder is equipped with two air intake ports.

In the foregoing types of devices of the prior art, when the control valve is fully closed, air is introduced from between the two air intake valve openings into the cylinders only from the air intake valve opening on the side not closed off by the foregoing valve, thereby creating the desired swirl from the flow along the inside circumferential surfaces of the cylinders. However, a structural requirement of the foregoing devices of the prior art is to maximize the opening cross section of the two air intake valve openings, which means that both will be in close proximity as seen in the camshaft direction, thereby limiting the degree to which the flows along the inside circumferential surfaces of the cylinders may be strengthened. Consequently, it is difficult to generate adequate swirls.

Further, devices in the prior art also use a so-called swirl generator in the air intake passage not having the valve to open and close it (primary passage), but this swirl generator causes the air drag in the passage to increase, and because it takes up half the overall air intake passage cross sectional area, those effects are significant. As a result, the maximum air intake volume is lowered by such designs.

At this point, the present applicant sought to resolve the problem of inadequate swirl generation caused by the foregoing air intake valve openings being in too close proximity in the camshaft direction, and developed air intake control devices wherein first and second side air intake valve openings are situated on either side of a center air intake valve opening to separate the first and second side air intake openings, in other words, to position these openings closer to the inside circumferential surface of the cylinders so that during periods of low air intake requirements, air may be introduced into the cylinders through just one of the side air intake valve openings to strengthen swirl generation.

However, in engines with the above described technology, there are cases when abnormally high temperatures may be generated in the vicinity of the center air intake valve opening during periods of low air intake requirements, and this feature makes the area susceptible to carbon buildup.

On the other hand, it is also known that an effective way to stabilize idle-timing is to shorten the opening period for either or both the air intake valves and exhaust valves in order to shorten the overlap period between the air intake valves and exhaust valves. However, if the valve opening period is shortened in order to reduce the overlap, it becomes difficult to establish adequate valve lift, and, as a result, the maximum air intake-volume is diminished and adequate output cannot be obtained when the engine is operating at high speeds.

The invention was made in the light of the afore-mentioned circumstances. Accordingly, it aims at improving the flow conditions in an air intake duct of an engine having three intake valves with a view also to cooling a center intake valve and stabilizing engine running under idling conditions.

This technical problem is solved by an internal combustion engine comprising the features of claim 1.

Thus, an improved torque curve as shown by curve T3 in figure 8 can be achieved. Accordingly, the output torque will be improved over a broad range from low RPM to high RPM compared with a two-valve engine.

According to a preferred embodiment of the invention, the secondary passage comprises a centre branch passage leading to the centre valve opening. In other words, the secondary passage defines a compound passage constituted by a branch passage leading to the centre valve opening and a branch passage leading to a side valve opening. During periods of low air intake requirements, the valve in the compound air intake passage is closed, causing all the air intake to flow into the cylinder through the single air intake passage (primary passage), with the fuel also being supplied to this single air intake passage. A part of the fuel which is supplied to that single air intake passage, passes through the bypass port into the compound air intake passage (secondary passage), inhibiting the increase in the temperature around the center air intake valve opening and the first side air intake valve opening.

Preferrably the opening interval of the side intake valve of the primary passage is set to be shorter than that of the other intake valve, thereby decreasing the overlap with the exhaust valve, thereby stabilizing idling by avoiding residual exhaust gases inside of the combustion chamber, and increasing low speed torque.

On the other hand, during periods of high air intake requirements, the secondary passage is opened, and the intake air passes through both air intake branch passages and through the respective air intake valve openings into the cylinder. At this time, the opening interval of this air intake valve of the secondary passage is set to be greater than that of the air intake valve of the primary passage, thereby raising the maximum air intake and improving output.

During periods of low air intake requirements, the air intake control valve causes the flow to be diverted toward the primary passage and from there, it is diverted away from the camshaft direction, to wit, toward the side air intake valve opening of the primary passage located near the inside circumferential surface of the cylinder, from where it flows into the cylinder. When viewed in the axial direction of the cylinder, this feature generates a horizontal swirl along the inside surface of the cylinder. In addition, since the angle formed between the side air intake passage area of the primary passage and the cylindrical axis at the ceiling of the cylinder has been decreased and since the throat area has been shortened, then, when viewed in the camshaft direction, the vast majority of the intake air flows in the air intake valve opening toward the exhaust side, generating a tumbling action, thereby assuring the generation of strong flows in the cylinder.

On the other hand, during periods of high air intake requirements, the diversion of the flow by the air intake control valve is released, so that all the intake air enters the cylinder from all the air intake valve openings. In this case, the side air intake passage of the secondary passage and the center air intake passage form a larger angle with respect to the cylindrical axis at the ceiling of the cylinder, thereby presenting a more gradual curve and a shape which cuts the air intake drag. Further, since the side air intake branch passage of the secondary passage with comparatively high drag accounts for no more than 1/3 of the total intake air, compared to the prior art devices with two air intake valve openings, the overall air intake drag is lower, and it is possible to inhibit the decline in the maximum air intake flow entailed by designing this side air intake passage of the secondary passage with a high drag shape. According to still a further embodiment of the invention the air intake passage is partitioned into a compound air intake passage and a single air intake passage, wherein the above described air intake passage is closed by a valve when operating under low air intake requirements; and there is one common air intake passage, and said common air intake passage is closed during periods of low air intake requirements, and moreover, there is a notch which allows intake air to be diverted to a side air intake passage area, thereby providing a structure that realizes the same effects that were realised in the latter above mentioned embodiment.

Further preferred embodiments of the present invention are laid down in further dependent claims.

Hereinafter, the present invention is explained and illustrated in greater detail by means of example and with reference to the accompanying drawings, wherein:
**Figure 1** is a front sectional view (along line I-I of Figure 2) of a four-cycle engine according to a first embodiment.
**Figure 2** is a top sectional view (along line II-II of Figure 1) of the foregoing first engine embodiment.
**Figure 3** is a left sectional view of an engine according to a second embodiment.
**Figure 4** is a sectional top view (along line IV-IV of Figure 4) of the foregoing second engine embodiment.
**Figure 5** is a sectional view to explain the shape of the branch passages of the foregoing second engine embodiment.
**Figure 6** is a sectional view to explain the shape of the branch passages of the foregoing second engine embodiment.
**Figure 7** is a graph of the lift curve of the foregoing second engine embodiment.
**Figure 8** is a graph of engine RPM vs. torque characteristics to illustrate the effects of the engine embodiments.
**Figure 9** is a front sectional view (along line IX-IX of Figure 10) showing an engine according to a third embodiment.
**Figure 10** is a sectional top view (along line X-X of Figure 9) of the foregoing third engine embodiment.
**Figure 11** is a sectional top view showing a modification of the foregoing second engine embodiment.
**Figure 12** is a sectional top view showing an engine according to a fourth embodiment.
**Figure 13** is a diagram used to describe the shape of the air intake passage of the foregoing engine embodiments.

In the Figures, 1 is a four cycle engine equipped with the air intake control device. It is a water cooled, four-cycle, four-cylinder, five-valve engine. The cylinder head 3 of said engine 1 is mounted atop the cylinder block 2 and is held in place by head bolts 6. A head cover 4 is also attached to the top mating surface of the cylinder head 3.

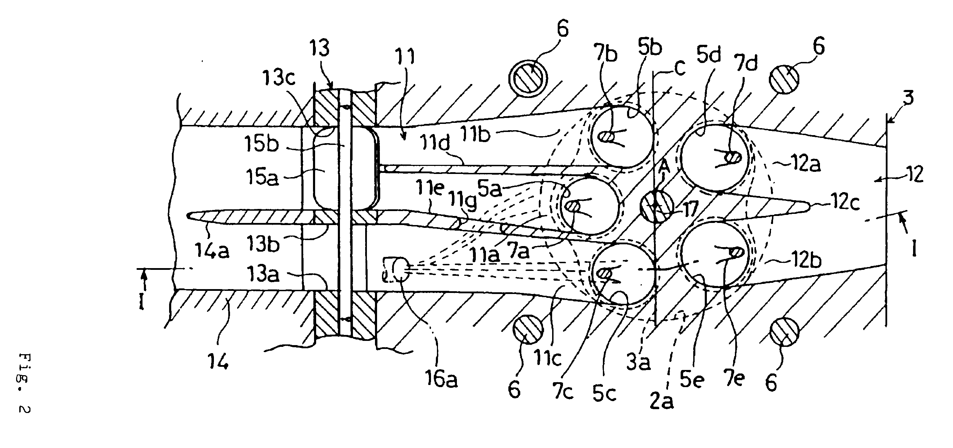

Four cylinder bores (cylinders) 2a are formed in a row in the foregoing cylinder block 2, and concave areas 3a, which together with the foregoing cylinder bores 2a comprise the combustion chambers, are present in the bottom surface of the cylinder head 3. The center air intake valve opening 5a is present in these concave combustion areas 3a on one side (the left side in Figure 2) of the center line C that runs parallel to the camshaft and through the cylindrical axis A, and in the center in the camshaft direction (the vertical direction in Figure 2). In addition, on both sides of said opening 5a and as seen in the camshaft direction, left and right (first and second) side air intake valve openings 5b, 5c are present in each of the cylinders 5. On the other side of the foregoing concave combustion areas 3a (the right side in Figure 2) are left and right exhaust valve openings 5d, 5e. In addition, spark plugs 17 are threaded into the foregoing concave combustion areas 3a in their approximate centers so that their electrodes are situated at the boundary with the combustion chambers.

In addition, the foregoing center, left and right side air intake valve openings 5a, 5b, 5c are respectively opened and closed by center, left and right side air intake valves 7a, 7b and 7c. The foregoing left and right exhaust valve openings 5d, 5e are also opened and closed by left and right exhaust valves 7d, 7e. The foregoing air intake valves 7a-7c and exhaust valves 7d, 7e are biased into a normally closed position by valve springs 9a, 9b, and are opened and closed by valve lifters 8a, 8b that are driven by the air intake and exhaust camshafts 10a, 10b.

The angle 61 formed between the axial line B1 of the foregoing center air intake valve 7a and the cylindrical axis A is smaller than the angle θ2 formed between the axes of the left and right side air intake valves 7b, 7c and the cylindrical axis A. In other words, the center air intake valve 7a is more upright than the side air intake valves 7b, 7c.

The foregoing center, left and right side air intake valve openings 5a, 5b, 5c are respectively connected with the center, left and right side branch passages 11a, 11b, 11c. A valve body 13 is installed in an external connection opening 11f located near the outer wall of the cylinder head 3 in the air intake passage 11 that makes up said three branch passages 11a-11c, and that opening 11f connects to an air intake manifold 14. The partitioning wall 11e between the foregoing center branch passage 11a and the right side branch passage 11c connects with the partitioning wall 14a of the foregoing air intake manifold 14 from the partitioning wall 13b of the foregoing valve body 13. In addition, the partitioning wall 11d, which lies between the center branch passage 11a and the left side branch passage 11b, extends to the vicinity of the foregoing valve body 13. Overall, therefore the air intake passage 11 in this embodiment is divided into a compound passage consisting of two branches, the center branch passage 11a and the left side branch passage 11b, as well as a right side air intake passage 11c that forms a single air intake passage. When looking at the cross-section of the foregoing compound air intake passage, it forms a small, approximately semi-circular shape, while the cross section of the foregoing single air intake passage is approximately circular.

The above described valve body 13 is plate-shaped and spans the length of the four cylinders, and a boss 13c' is formed on the center top surface - in the foregoing left side branch passage (single air intake passage) 11b of said valve body 13. This boss 13c' accommodates the mounting of a fuel injection valve 16, so that the injection nozzle 16a of said valve 16 points at a fuel guide groove 11h that is present in the ceiling of the foregoing right side branch 11c that leads toward the foregoing right side intake valve opening 5c.

The foregoing valve body 13 is partitioned by a partitioning wall 13b into a single air intake hole 13a and a compound air intake hole 13c. Also, inside of this valve body 13 is a valve plate 15a affixed to a valve shaft 15b that is inserted across the body 13 in the camshaft direction and comprises a valve that opens and closes. This valve plate 15a is positioned in the compound air intake hole 13c in the foregoing valve body 13 so that it can open and close both the foregoing center branch passage 11a and the left side branch passage 11b.

Though it is not shown in the Figure, the end of the foregoing valve shaft 15b is connected to a valve opening-and-closing drive mechanism which drives said valve shaft 15b open and closed; said drive mechanism is controlled by open and close drive signals generated by an ECU.

Further, a bypass hole 11g is present in the partitioning wall lie dividing the foregoing compound air intake passage and single air intake passage, between the foregoing fuel injection nozzle 16a and the center air intake valve opening 5a. A part of the fuel from the foregoing fuel injection valve 16 passes through this bypass port 11g and enters the center branch passage 11a.

Next, the operational effects of the first embodiment will be explained.

When the engine is operating at low speed or in low load operating ranges, when there is a comparatively low requirement for intake air, a signal generated by the foregoing ECU causes the drive mechanism to turn the foregoing valve shaft 15b into the fully closed position.

This feature causes the valve plate 15a to completely close the compound air intake hole 13c so that all the intake air is concentrated in the right side branch passage 11c, which functions as the primary air intake passage. As a result, a swirl is generated that follows the inside circumference of the cylinder. In this case, the left and right side air intake valve openings 5b, 5c are separated by a great distance in the camshaft direction, in other words, in this camshaft direction, they are positioned closer to the inside circumferential surface of the cylinder 5 As a result, the inflow into the cylinder 5 of the intake air generates a stronger swirl along the inside circumferential surface of the cylinder 5.

Here, there is no flow of air to the center branch passage 11a and the left side branch passage 11b, thereby raising concern that the temperatures in the vicinity of the center air intake valve 7a and its opening 5a might rise to abnormally high levels. However, in the present embodiment, the fuel spray from the fuel injection valve 16 is directed primarily toward the right air intake valve opening 5c, but a part of it passes through the bypass port 11g, through the center branch passage 11a, to the back surface of the center air intake valve 7. As a result, the fuel from the foregoing bypass port 11g cools the area of the center air intake valve 7a, thereby averting the above described abnormal temperature increases.

On the other hand, when the engine is operating at high speed or at high loads when there is a high requirement for intake air, a signal from the foregoing ECU causes the drive mechanism to rotate the foregoing valve shaft 15b to the fully open position, and as a result, in addition to the air intake from the foregoing primary passage, the right side branch passage 11c, air flows into the cylinder 5 also from the centre and left side branch passages 11a, 11b, which function as secondary passages. In this case, the majority of the fuel is directed toward the right side air intake passage 7c toward the right side air intake valve 5c, so that the intake vapor from the left side air intake valve opening 5b is just air, thereby creating so-called stratified combustion.

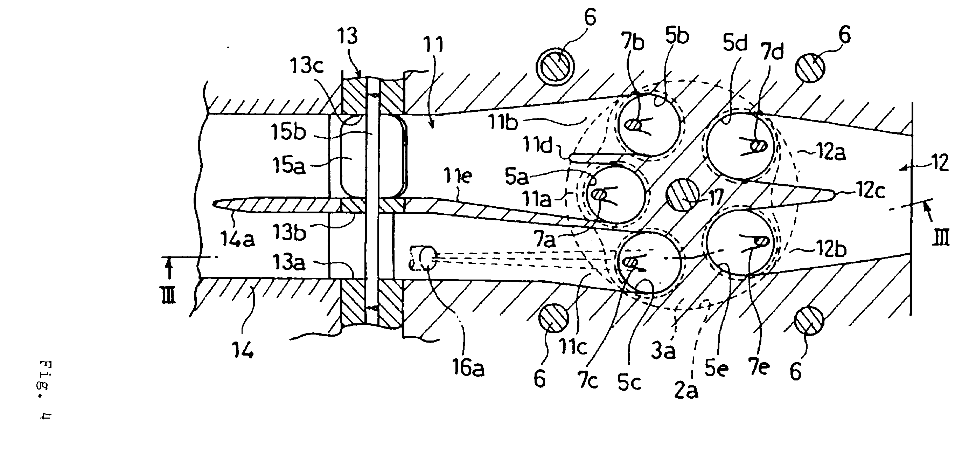

In the foregoing description, the partitioning wall 11d of the center and left side branch passage 11a, 11b extends to the vicinity the opening and closing valve, but this partitioning wall 11d may be as shown in Figure 4, shorter and positioned more toward the air intake side from the bypass port. In this case, the cooling effect would also extend to the area of the left side air intake valve 7b and its opening 5b.

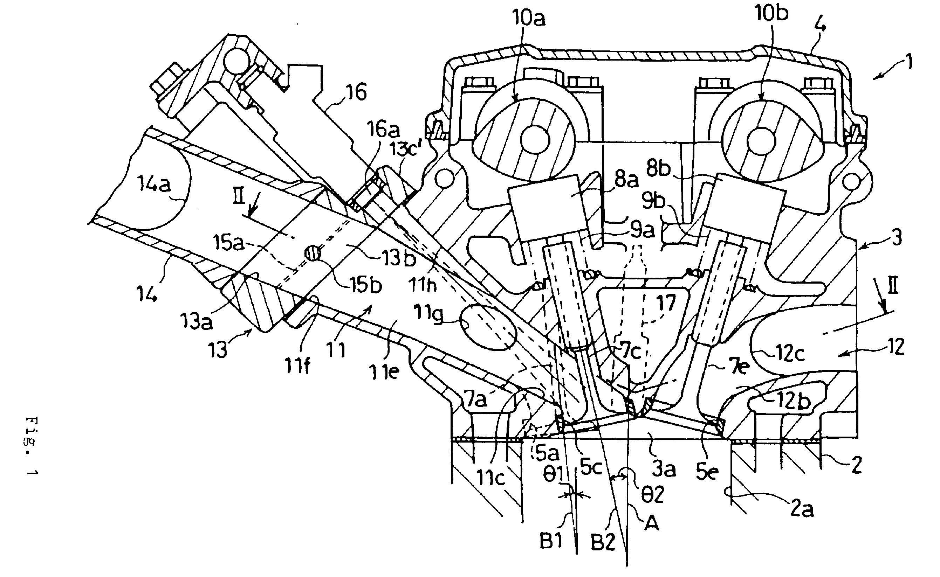

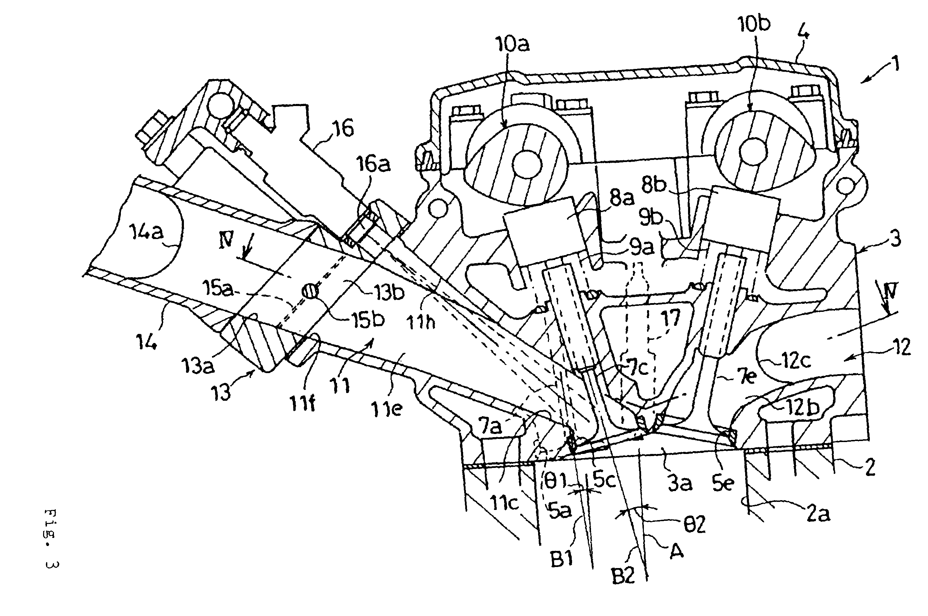

Figures 3 through 8 show a second embodiment of an engine and more specifically the engine's air-intake control devices. In the Figures, parts identical to or corresponding to those in Figures 1 and 2 bear the same reference numbers.

In this embodiment, the partitioning wall 11d between the center branch passage 11a and the left side branch passage 11b is set to be short, to extend to the vicinity of the inside wall of the cylinder bore 2a. Further in this second embodiment, the right side branch passage 11c, which functions as the primary passage, and the left side air intake branch passage 11b, which functions as the secondary passage, have vastly differing shapes, particularly with regard to their ceiling surface and bend areas going toward the air intake valve opening 5b, 5c. While the right side branch passage 11c is shaped to assure the generation of a strong swirl or tumble during periods of low air intake, the left side branch passage 11b, is shaped to provide as little as possible air intake drag during operations requiring high volumes of air intake, thereby increasing the maximum air intake volume.

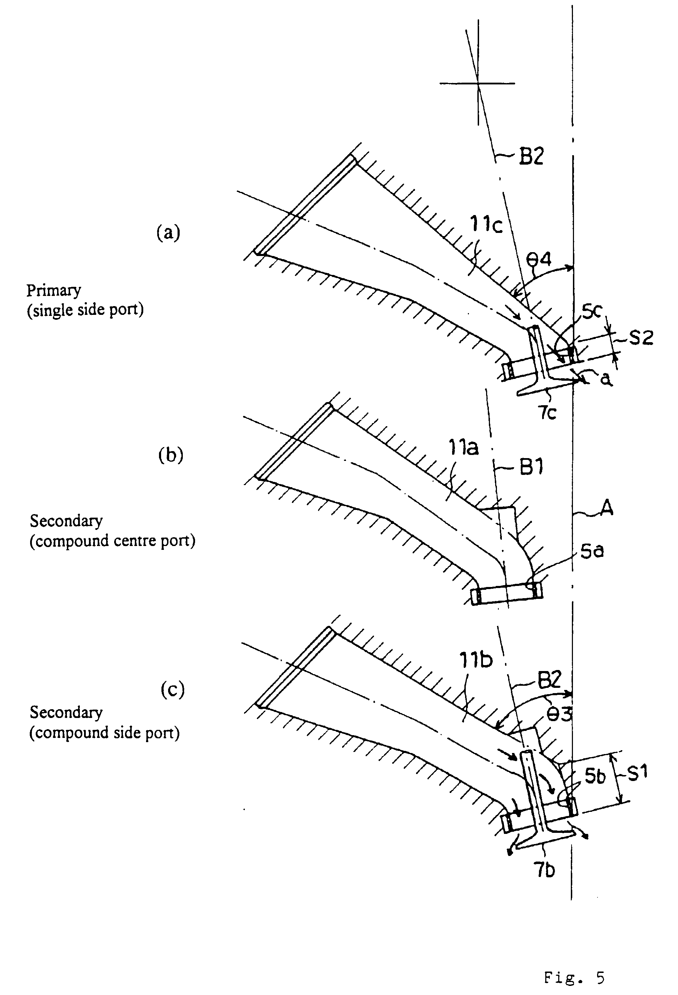

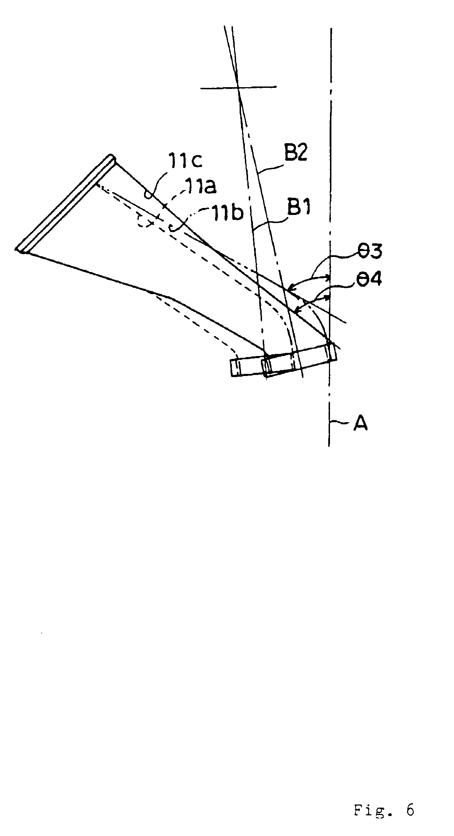

To wit, as is clear from Figures 5 and 6, the angle 64 subtended between the ceiling of the foregoing right side branch passage 11c and the cylindrical axis A is smaller than the angle θ3 subtended between the ceiling of the foregoing left side branch passage 11b and the cylindrical axis A, and further, the closer to the air intake valve opening 5c, the lower the ceiling height, and the less the opening. Further, the throat bend area S2 which runs parallel to the valve stem B2 is designed to be very short. Due to this design, the majority of intake air that is introduced into the cylinder 5, as shown by the solid line arrow a in Figure 5(a), enters through the gap between the air intake valve opening 5c and the air intake valve 7c directed toward the cylindrical axis A, flowing along the exhaust side of the inside of the cylinder 5 and generating the tumbling action along the cylindrical axis A. Also, as will be described below, when the throat area S1 of the left side branch passage 11b is lengthy, the air intake flows very uniformly through the foregoing gap, making it difficult to generate a tumble. Again, since the foregoing air intake valve opening 5c is positioned outside of the camshaft direction when viewed along the cylindrical axis A, it is easier to generate a swirling action around the inside circumferential surface of the cylinder 5.

On the other hand, the height of the left side branch passage 11b changes less dramatically, and the area toward the air intake valve opening 5b curves gradually with a comparatively large curvature radius. Furthermore, the throat area S1, which runs parallel to the valve stem B1, is designed to be longer than the foregoing S2, and this decreases the air intake drag so that the maximum air intake volume may be achieved. Also, the center branch passage 11a is of the same shape as the foregoing left side branch passage 11b, in other words, it is designed to have low air intake drag.

Also in the present embodiment, as illustrated in Figure 7, the shape of the cam peaks has been designed in such manner that the lift curve IN1 for the foregoing right side air intake valve 7c and the lift curve IN2 for the center and left side air intake valves 7a, 7b and their respective open intervals P1, P2 and maximum apertures L1, L2, shall be different. To wit, the opening timing is delayed and the closing timing is advanced for the right side intake valve 7c, positioned in the primary passage, in order that its opening interval be shorter compared with the timing for the center and left side air intake valves 7a, 7b which are located in the secondary air intake passage, and the maximum aperture (lift) is lower as well.

Next, the operational effects of the second embodiment will be described.

With low requirements for air intake, the secondary passage (center and left side branch passage 11a, 11b) is fully closed, and all the air intake is through the primary passage (right side branch passage 11c) which enters through the right side air intake valve opening 5c. In this case, since the right side branch passage 11c is shaped to facilitate the generation of a swirl or tumble, a stronger swirling and tumbling action is generated. In other words, the right side air intake valve opening 5c is positioned toward the camshaft 10a so that the intake air entering it flows horizontally along the inside circumference of the cylinder wall to generate a swirl. Additionally, the farther downstream in the right side branch passage 11c, the more constricted it becomes, and since the throat area S2 is very short, the vast majority of the intake air flows in from the air intake valve opening 5c toward the exhaust side to generate a vertical tumbling action along the axial direction of the cylinder.

Further, since the opening timing is delayed for the foregoing primary passage, i.e. the right side air intake valve 7c, there is but a small overlap D1 with the lift curve EX for the exhaust side. As a result, during periods of low air intake requirement, combustion is good and idling RPM is stabilized. In addition, since the closing timing is delayed, the air intake blow-back is reduced, and low speed torque is thereby improved.

On the other hand, during periods of high air intake requirements, the secondary passage is fully open, with the intake air flowing through both the primary and secondary passages into the cylinder 5. In the case of the present embodiment, the center and left side branch passages 11a, 11b that compose the secondary air intake passage have been shaped to present only little air intake drag, thereby increasing the maximum air intake volume. Further, the opening interval T2 and the lift L2 for the center and left side air intake valves 7a, 7b located in the secondary air intake passage have been set to comparatively large values, and this feature serves to increase the air intake volume, which, as a result, increases torque during periods of high air intake.

In the present embodiment, the right side branch passage 11c that composes the primary passage has a shape (swirl port) that entails relatively high air intake drag to facilitate the generation of a swirl, which is detrimental to increasing the maximum air intake volume, but this swirl port is just one of three passages and comprises about 1/3 of the total. Accordingly, those effects are minimal compared with designs using only two of the foregoing air intake passages.

Figure 8 is a graph to explain the torque-enhancing effects of the present embodiment. In the Figure, T3 represents a torque curve of a prior art engine that does not have primary and secondary passages, while torque curve T1 shows the effect in improving torque when the primary passage is a swirl port, and when using IN1 as the lift curve. Torque curve T2 shows the torque improvements when using a low air intake drag secondary passage as described above and the IN2 lift curve. According to this Figure 8, torque is improved across a broad range from the low speed operating range through the high speed operating range.

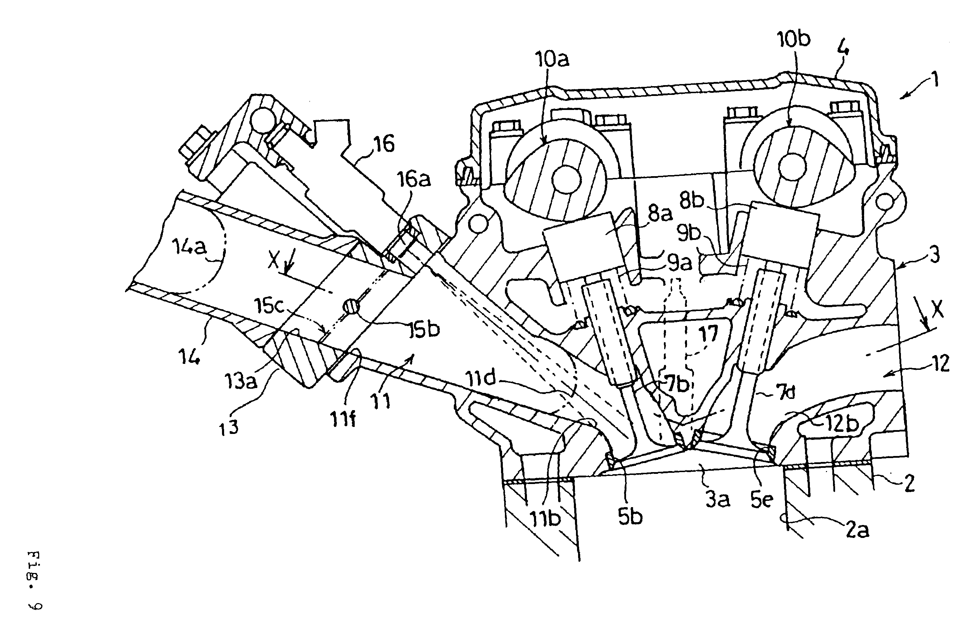

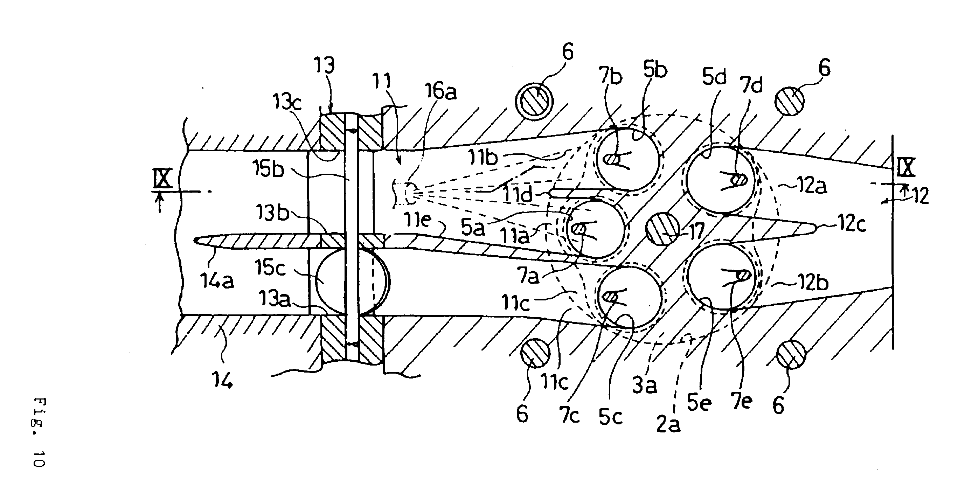

The explanation for the above second embodiment involves a primary passage composed of one branch passage and a secondary passage composed of two, but the reverse configuration, wherein the primary passage is composed of two branches and the secondary composed of one branch, may also be adapted. Such a configuration is shown in Figures 9 and 10 (third embodiment). In Figures 9 and 10, parts corresponding to those in Figures 1-8 bear identical reference numbers.

In this third embodiment, the fuel injection valve 16 is located in the primary passage, which is composed of the center and left side branch passages 11a, 11b. A disc-shaped valve plate 15c is located in the secondary passage 11c which is composed of the right side branch passage 11c. In addition, the lift curves for the center air intake valve 7a and the left side air intake valve 7b have been set to IN1, while the lift curve for the right side air intake valve 7c has been set to IN2.

As with the foregoing second embodiment, the present embodiment provides stabilized idling RPM due to good combustion during periods of low air intake and it also increases low speed torque; torque is also improved during periods of high RPM.

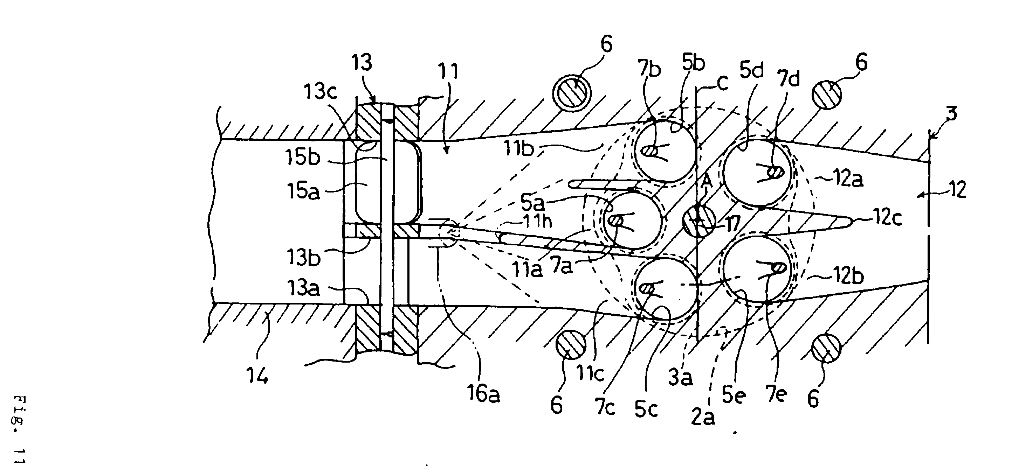

In the foregoing embodiments, a valve was situated in the secondary passage to open and close it, and the fuel injection valve was located in the primary passage, however, it does not require that the fuel injection valve be situated in the primary passage. As shown in the modified embodiment in Figure 11, it is also possible to position it near the partitioning wall 11e that divides the primary and secondary passages. In the Figure, parts identical to or corresponding to those in Figures 1 through 10 bear the same reference numbers.

When this type of configuration is used, an opening 11h is made between the partitioning wall 11e of air intake passage 11 and the partitioning wall 13b of the valve body (a notched area in the partitions), so that the injection nozzle 16a of the fuel injection valve 16 can be located in the vicinity of the top of said opening, and the nozzle shape of said injection nozzles 16a is selected so that it sprays fuel from the foregoing opening 11a toward the right side passage 11c and the center branch passage 11a and left side branch passage 11b.

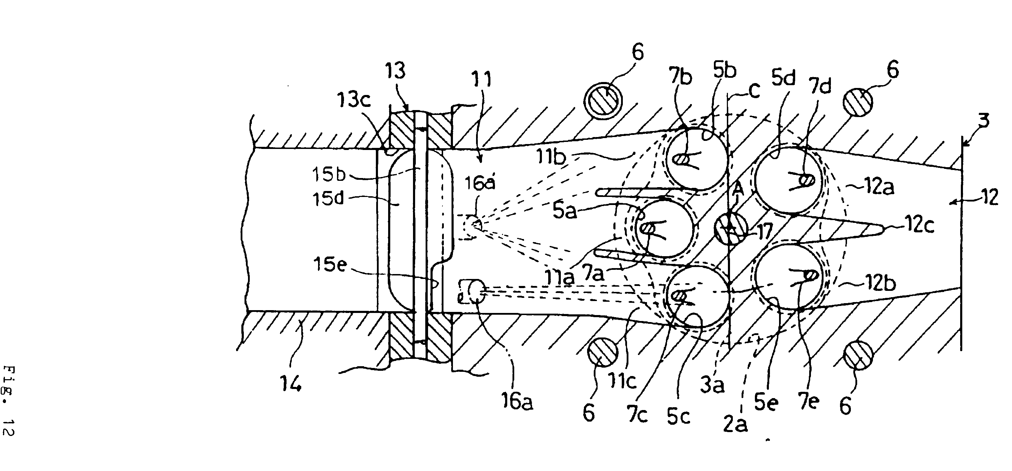

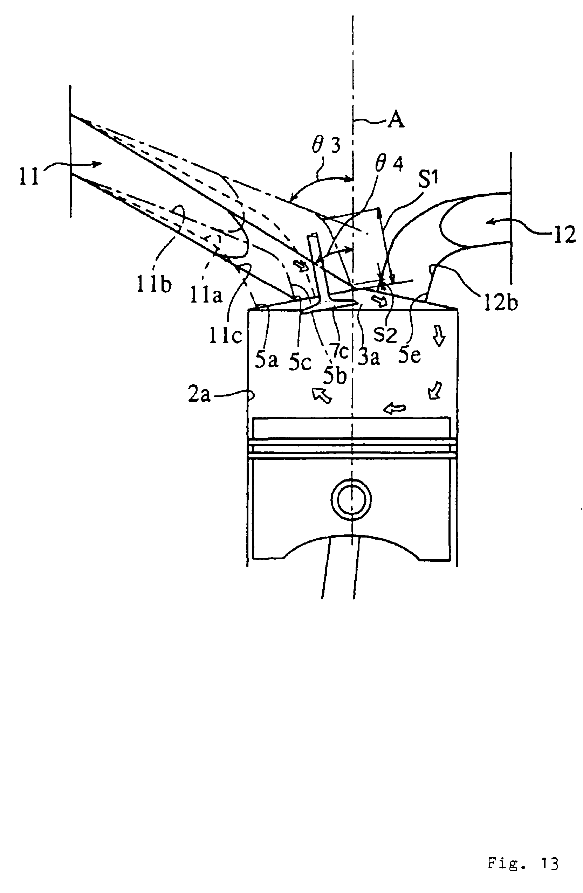

Further, in the foregoing embodiments, the primary and secondary passages were divided by partitioning walls, but it is also possible for the foregoing two passages to consist of a common passage. Figures 12 and 13 show a fourth embodiment. In the Figures, parts identical to or corresponding to those in Figures 1 through 11 bear the same reference numbers.

As shown in Figures 12 and 13, in this fourth embodiment, the cross sectional shape of the air intake passage 11 is oval, and it represents one common passage, which branches just upstream of the various intake valve openings into a left side air intake passage 11b, center air intake passage 11a, and right side air intake passage 11c.

The valve plate 15d of the valve body 13 is also oval in shape, largest in the width dimension, and corresponds to the shape of the upstream opening of the foregoing air intake passage 11, but the plate 15d has a notch 15e. When said valve plate 15d is closed over the air intake passage 11, this notch 15e is formed to that the intake flow is diverted to the corner area between the ceiling surface and the right side wall surface of the intake passage 11. Then, during operations requiring but low air intake levels, the rotation of the foregoing valve plate 15d into the closed position causes the intake flow to be diverted toward the right side air intake passage area 11c, which is the primary passage, to generate a strong flow inside of the cylinder. The nozzle 16a of the fuel injection valve 16 is also positioned to spray fuel toward this right side air intake passage 11c. It is also possible to position the nozzle 16a' of the fuel injection valve 16 in the approximate center of the air intake passage 11, and to shape it to spray fuel toward the left and right side air intake passages 11b, 11c.

Also, as shown in Figure 13, this embodiment also constrains the angle θ4 between the ceiling of the right side air intake passage 11c and the cylindrical axis A to be smaller than the angle θ3 between the ceiling of the left side air intake passage 11b and the cylindrical axis A, and the passage height is lower as well. Further, the throat area S2 of the right side air intake passage 11c is very short. Also, in the current embodiment, because of the foregoing angle θ3 for the left side air intake passage area 11b, there is a gradual "R" shaped curve in the cylindrical axis direction, and the throat area S1 from the curvature to the air intake opening 5b is longer than the throat area S2 of the above described right side air intake passage 11a. This feature lowers the air intake drag, and even further boosts the maximum air intake volume.

In this fourth embodiment, during periods of low air intake requirements, the intake air is diverted by the notch 15e in the valve plate 15 toward the right side air intake passage, and moreover, the shape of said right side air intake passage is one that facilitates tumble and swirl generation, which assures strong flowing action inside the cylinder.

During periods of low air intake requirements, the valve that opens and closes the compound air intake passage is closed, so that the intake air enters the cylinder only through the single air intake passage, and in addition, a bypass port inside this single air intake passages supplies a part of the fuel to the inside of the compound air intake passage, thereby inhibiting temperature increases in the vicinity of the center air intake valve opening while generating a swirl.

Further during periods of low air intake requirements, the valve that opens and closes the first air intake passage is closed, so that the intake air enters the cylinder only through the second air intake valve opening, and additionally the opening interval in the lift curve for said second air intake valve is set to be shorter to decrease the overlap with the exhaust valves, thereby stabilizing the idling RPM while avoiding residual exhaust gas retention in the combustion chamber to improve low speed torque.

On the other hand, in periods of high air intake requirements, the first air intake passage is fully open and the intake air enters the cylinder from both the first and second air intake passages, and in addition, the opening interval in the lift curve for said first air intake valve is set to be greater, thereby increasing the maximum air intake volume to improve output during high speed operations.

Also, during periods of low air intake requirements, the shape of the air intake control valve facilitates the generation of a tumbling action by the intake air by focussing the air intake on the second side air intake passage (primary passage), and moreover, because this control valve is located distantly in the camshaft direction, in other words, in the vicinity of the circumferential surface of the cylinder, the air that is introduced from this second side air intake valve opening easily generates a swirl inside of the cylinder, with the effect of improving the flows-inside the cylinder.

Also, during periods of high air intake requirements, the intake air enters the cylinder both through the secondary air intake passage, which is designed to have low intake drag and through the first air intake passage to increase the maximum intake volume. Since this primary passage is shaped to generate swirls and tumbles, the intake resistance is relatively high, but since its cross section accounts for only about 1/3 of the total passage cross section, it is possible to restrict the decrease in the maximum air intake volume attributable to the port shape which is designed to improve flows in the cylinder.

## Claims

1. Internal combustion engine (1) of the four-cycle type comprising:
a cylinder block (2) having at least one cylinder bore (2a) and at least one cylinder head (3) fastened to said cylinder block (2) through a plurality of head bolts (6),
at least three air intake valve openings (5a,5b,5c) formed in said cylinder head (3) one of which, a centre air intake valve opening (5a), lying substantially arranged on a plane containing the axis (A) of said cylinder bore (2a) and extending perpendicularly to the axis of rotation of an air intake camshaft (10a), and the remaining openings are arranged on both sides of said plane when viewing along the cylindrical axis (A) direction as left and right side intake valve openings (5b,5c),
a plurality of exhaust valve openings (5d,5e) formed in said cylinder head (3),
at least three air intake valves (7a,7b,7c) corresponding to said air intake valve openings (5a,5b,5c) supported for reciprocation along respective axial lines (B1,B2) by said cylinder head (3) and defining a first angle (θ1) between said axial line (B1 ) of the centre air intake valve (7a) and the axis (A) of the cylinder bore (2a) and a second angle (θ2) between the axes (B2) of the left and right side air intake valves (7b,7c),
and said axis (A) of the cylinder bore (2a),
a fuel injection valve (16) having an injection nozzle (16a),
a plurality of exhaust valves (7d,7e) supported for reciprocation by said cylinder head (3) and driven by an exhaust camshaft (10b), and an air intake passage (11) comprising a plurality of branch passages (11a,11b,11c),
said branch passages (11a,11b,11c) define a primary passage and a secondary passage and said secondary passage is closeable by a valve (13,15a,15b) arranged within said air intake passage (11),
**characterized in that**
an angle (θ4) subtended between the ceiling of the intake branch passage (11c) leading to the side valve opening (5c) of said primary passage and the cylinder axis (A) is smaller than an angle (θ3) subtended between the ceiling of the intake branch passage (11b) leading to the side valve opening (5b) of said secondary passage and the cylinder axis (A), and
wherein the height (S₁,S₂) of a throat bend area of the intake branch passage (11c, 11b) at the intake valve opening is smaller for the side valve opening (5c) of the primary passage than for the side valve opening (5b) of the secondary passage.

2. Internal combustion engine (1) according to claim 1, **characterized in that** said secondary passage comprises a centre branch passage (11a) leading to the centre valve opening (5a).

3. Internal combustion engine (1) according to claim 2, **characterized in that** a first partitioning wall (11d) is provided between the centre branch passage (11a) and the left side branch passage (11b) both forming said secondary passage, said first partitioning wall (11d) starting from the bottom side of said cylinder head (3) and extending to the vicinity of said valve (13,15a,15b) and that a second partitioning wall (11e) is provided between the centre branch passage (11a) and the right side branch passage (11c) defining the primary passage, said second partitioning wall (11e) starting from the bottom side of said cylinder head (3) and extending to the vicinity of said valve (13,15a,15b).

4. Internal combustion engine (1) according to claim 3, **characterized in that** a third partitioning wall (14a) is provided, which is an elongation of said second partitioning wall (11e) upstream of said valve (13,15a,15b).

5. Internal combustion engine (1) according to at least one of the preceding claims 1 to 4, **characterized in that** said fuel injection valve (16) is arranged such that said injection nozzle (16a) points at a fuel guide groove (11h) provided in the ceiling of said right side branch passage (11c) leading to the right side valve opening (5c) which is the valve opening by the primary passage.

6. Internal combustion engine (1) according to at least one of the preceding claims 3 to 5, **characterized in that** a by-pass hole (11g) is provided within said second partitioning wall (11e).

7. Internal combustion engine (1) according to claim 1 or 2, **characterized in that** a first partitioning wall (11d) is provided between the centre branch passage (11a) and the left side branch passage (11b) both forming said secondary passage, said first partitioning wall (11d) starting from the bottom side of said cylinder head (3) and extending approximately to the inside wall of said cylinder bore (2a) and that a second partitioning wall (11e) is provided between the centre branch passage (11a) and the right side branch passage (11c) defining said primary passage, said second partitioning wall (11e) starting from the bottom side of said cylinder head (3) and extending to the vicinity of said valve (13,15a,15b).

8. Internal combustion engine (1) according to claim 7, **characterized in that** a third partitioning wall (14a) is provided which is an elongation of said second partitioning wall (11e) upstream of said valve (13,15a,15b).

9. Internal combustion engine (1) according to claim 7 or 8, **characterized in that** said fuel injection valve (16) is directed to the right side branch passage (11c) leading to the valve opening (5c) of the primary passage.

10. Internal combustion engine (1) according to claim 1, **characterized in that** a centre branch passage (11a) and the left side branch passage (11b) form said primary passage whereas the right side branch passage (11c) forms said secondary passage.

11. Internal combustion engine (1) according to claim 10, **characterized in that** a first partitioning wall (11d) is provided between the centre branch passage (11a) and the left side branch passage (11b), said first partitioning wall (11d) starting from the bottom side of said cylinder head (3) and extending approximately to the inside wall of said cylinder bore (2a) and in that a second partitioning wall (11e) is provided between said centre branch passage (11a) and the right side branch passage (11e), said second partitioning wall (11e) starting from the bottom side of said cylinder head (3) and extending to the vicinity of said valve (13,15a,15b).

12. Internal combustion engine (1) according to claim 10 or 11, **characterized in that** said fuel injection valve (16) is directed to the primary passage.

13. Internal combustion engine (1) according to at least one of the preceding claims 10 to 12, **characterized in that** an opening (11h) is provided within said second partitioning wall (11e) adjacent to said valve (13,15b,15c).

14. Internal combustion engine (1) according to claim 1 or 2, **characterized in that** said branch passages (11a,11b,11c) are separated by partitioning walls starting from the bottom side of said cylinder head (3) and extending approximately to the inside wall of said cylinder bore (2a).

15. Internal combustion engine (1) according to claim 14, **characterized in that** a valve plate (15d) of said valve (13,15b) has an oval shape corresponding to the shape of said air intake passage (11) and that said valve plate (15d) comprises a notch (15e) adjacent to the said right side branch passage (11c).

16. Internal combustion engine (1) according to claim 14 or 15, **characterized in that** said fuel injection valve (16) is arranged to spray fuel towards the right side branch passage (11c).

17. Internal combustion engine (1) according to claim 14 or 15, **characterized in that** said fuel injection valve (16) is arranged in the approximate centre of said air intake passage (11) and has such a shape that fuel is sprayed towards the left (11b) and right side branch passages (11c) but not towards the centre branch passage (11a).

## Patentansprüche

1. Brennkraftmaschine (1) vom Viertakt-Typ, die aufweist:
einen Zylinderblock (2), der mindestens eine Zylinderbohrung (2a) und mindestens einen Zylinderkopf (3), befestigt an dem Zylinderblock (2) mittels einer Vielzahl von Kopfschrauben (6), besitzt,
mindestens drei Lufteinlaßventilöffnungen (5a, 5b, 5c), die in dem Zylinderkopf (3) gebildet sind, wobei eine davon, eine mittlere Lufteinlaßventilöffnung (5a), im wesentlichen auf einer Ebene angeordnet liegt, die die Achse (A) der Zylinderbohrung (2a) enthält und sich senkrecht zu der Drehachse einer Lufteinlaßnockenwelle (10a) erstreckt, und wobei die verbleibenden Öffnungen auf beiden Seiten der Ebene, wenn entlang der Richtung der Zylinderachse (A) gesehen wird, als links- und rechtsseitige Einlaßventilöffnung (5b, 5c) angeordnet sind,
eine Vielzahl von Auslaßventilöffnungen (5d, 5e), die in dem Zylinderkopf (3) gebildet sind,
mindestens drei Lufteinlaßventile (7a, 7b, 7c) entsprechend den Lufteinlaßventilöffnungen (5a, 5b, 5c), gehalten für eine Hin- und Herbewegung entlang jeweiliger axialer Linien (B1, B2) durch den Zylinderkopf (3) und einen ersten Winkel θ1 zwischen der axialen Linie (B1) des mittleren Lufteinlaßventils (7a) und der Achse (A) der Zylinderbohrung (2a) und einen zweiten Winkel θ2 zwischen den Achsen (B2) des links- und rechtsseitigen Lufteinlaßventils (7b, 7c) und der Achse (A) der Zylinderbohrung (2a) definierend,
ein Kraftstoffeinspritzventil (16), das eine Einspritzdüse (16a) besitzt,
eine Vielzahl von Auslaßventilen (7d, 7e), die für eine Hin- und Herbewegung durch den Zylinderkopf (3) gehalten sind und angetrieben durch eine Auslaßnockenwelle (10b), und einen Lufteinlaßkanal (11), der eine Vielzahl von Verzweigungskanälen (11a, 11b, 11c) aufweist,
wobei die Verzweigungskanäle (11a, 11b, 11c) einen primären Kanal und einen sekundären Kanal definieren und der sekundäre Kanal durch ein Ventil (13, 15a, 15b), angeordnet innerhalb des Lufteinlaßkanals (11), verschließbar ist,
dadurch gekennzeichnet, daß
ein Winkel θ4 zwischen der Decke des Einlaßverzweigungskanals (11c), zu der Seitenventilöffnung (5c) des primären Kanals führend, und der Zylinderachse (A) kleiner als ein Winkel θ3 ist, der zwischen der Decke des Einlaßverzweigungskanals (11b), zu der Seitenventilöffnung (5b) des sekundären Kanals führend, und der Zylinderachse (A), und
wobei die Höhe (S₁, S₂) eines Mündungsbiegungsbereichs des Einlaßverzweigungskanals (11c, 11b) an der Einlaßventilöffnung kleiner für die Seitenventilöffnung (5c) des primären Kanals ist als für die Seitenventilöffnung (5b) des sekundären Kanals.

2. Brennkraftmaschine (1) nach Anspruch 1, dadurch gekennzeichnet, daß der sekundäre Kanal einen mittleren Verzweigungskanal (11a), zu der mittleren Ventilöffnung (5a) führend, aufweist.

3. Brennkraftmaschine (1) nach Anspruch 2, dadurch gekennzeichnet, daß eine erste Unterteilungswand (11d) zwischen dem mittleren Verzweigungskanal (11a) und dem linksseitigen Verzweigungskanal (11b) vorgesehen ist, wobei beide den sekundären Kanal bilden, wobei die erste Unterteilungswand (11d) von der Bodenseite des Zylinderkopfs (3) beginnt und sich zu der Nähe des Ventils (13, 15a, 15b) erstreckt, und daß eine zweite Unterteilungswand (11e) zwischen dem mittleren Verzweigungskanal (11a) und dem rechtsseitigen Verzweigungskanal (11c), den primären Kanal definierend, vorgesehen ist, wobei die zweite Unterteilungswand (11e) von der Bodenseite des Zylinderkopfs (3) beginnt und sich bis zu der Nähe des Ventils (13, 15a, 15b) erstreckt.

4. Brennkraftmaschine (1) nach Anspruch 3, dadurch gekennzeichnet, daß eine dritte Unterteilungswand (14a) vorgesehen ist, die eine Verlängerung der zweiten Unterteilungswand (11e) einströmseitig des Ventils (13, 15a, 15b) ist.

5. Brennkraftmaschine (1) nach mindestens einem der vorhergehenden Ansprüche 1 bis 4, dadurch gekennzeichnet, daß das Kraftstoffeinspritzventil (16) so angeordnet ist, daß die Einspritzdüse (16a) zu einer Kraftstofführungsnut (11h) hinweist, vorgesehen in der Decke des rechtsseitigen Verzweigungskanals (11c), zu der rechtsseitigen Ventilöffnung (5c) führend, die die Ventilöffnung durch den primären Kanal ist.

6. Brennkraftmaschine (1) nach mindestens einem der vorhergehenden Ansprüche 3 bis 5, dadurch gekennzeichnet, daß ein Bypassloch (11g) innerhalb der zweiten Unterteilungswand (11e) vorgesehen ist.

7. Brennkraftmaschine (1) nach Anspruch 1 oder 2, dadurch gekennzeichnet, daß eine erste Unterteilungswand (11d) zwischen dem mittleren Verzweigungskanal (11a) und dem linksseitigen Verzweigungskanal (11b) vorgesehen ist, wobei beide den sekundären Kanal bilden, wobei die erste Unterteilungswand (11d) von der Bodenseite des Zylinderkopfs (3) beginnt und sich ungefähr zu der Innenseitenwand der Zylinderbohrung (2a) erstreckt, und daß eine zweite Unterteilungswand (11e) zwischen dem mittleren Verzweigungskanal (11a) und dem rechtsseitigen Verzweigungskanal (11c), den primären Kanal definierend, vorgesehen ist, wobei die zweite Unterteilungswand (11e) von der Bodenseite des Zylinderkopfs (3) beginnt und sich bis zu der Nähe des Ventils (13, 15a, 15b) erstreckt.

8. Brennkraftmaschine (1) nach Anspruch 7, dadurch gekennzeichnet, daß eine dritte Unterteilungswand (14a) vorgesehen ist, die eine Verlängerung der zweiten Unterteilungswand (11e) einströmseitig des Ventils (13, 15a, 15b) ist.

9. Brennkraftmaschine (1) nach Anspruch 7 oder 8, dadurch gekennzeichnet, daß das Kraftstoffeinspritzventil (16) zu dem rechtsseitigen Verzweigungskanal (11c), zu der Ventilöffnung (15c) des primären Kanals führend, gerichtet ist.

10. Brennkraftmaschine (1) nach Anspruch 1, dadurch gekennzeichnet, daß ein mittlerer Verzweigungskanal (11a) und der linksseitige Verzweigungskanal (11b) den primären Kanal bilden, wogegen der rechtsseitige Verzweigungskanal (11c) den sekundären Kanal bildet.

11. Brennkraftmaschine (1) nach Anspruch 10, dadurch gekennzeichnet, daß eine erste Unterteilungswand (11d) zwischen dem mittleren Verzweigungskanal (11a) und dem linksseitigen Verzweigungskanal (11b) vorgesehen ist, wobei die erste Unterteilungswand (11d) von der Bodenseite des Zylinderkopfs (3) beginnt und sich ungefähr zu der Innenseitenwand der Zylinderbohrung (2a) erstreckt, und daß eine zweite Unterteilungswand (11e) zwischen dem mittleren Verzweigungskanal (11a) und dem rechtsseitigen Verzweigungskanal (11c) vorgesehen ist, wobei die zweite Unterteilungswand (11e) von der Bodenseite des Zylinderkopfs (3) aus beginnt und sich zu der Nähe des Ventils (13, 15a, 15b) erstreckt.

12. Brennkraftmaschine (1) nach Anspruch 10 oder 11, dadurch gekennzeichnet, daß das Krafstoffeinspritzventil (16) zu dem primären Kanal hingerichtet ist.

13. Brennkraftmaschine (1) nach mindestens einem der vorhergehenden Ansprüche 10 bis 12, dadurch gekennzeichnet, daß eine Öffnung (11h) innerhalb der zweiten Unterteilungswand (11e), angrenzend an das Ventil (13, 15b, 15c), vorgesehen ist.

14. Brennkraftmaschine (1) nach Anspruch 1 oder 2, dadurch gekennzeichnet, daß die Verzweigungskanäle (11a, 11b, 11c) durch Unterteilungswände separiert sind, die von der Bodenseite des Zylinderkopfs (3) beginnen und sich ungefähr zu der Innenseitenwand der Zylinderbohrung (2a) erstrecken.

15. Brennkraftmaschine (1) nach Anspruch 14, dadurch gekennzeichnet, daß eine Ventilplatte (15d) des Ventils (13, 15b) eine ovale Form entsprechend der Form des Lufteinlaßkanals (11) besitzt und daß die Ventilplatte (15d) eine Kerbe (15e) angrenzend an den rechtsseitigen Verzweigungskanal (11c) aufweist.

16. Brennkraftmaschine (1) nach Anspruch 14 oder 15, dadurch gekennzeichnet, daß das Kraftstoffeinspritzventil (16) so angeordnet ist, um Kraftstoff zu dem rechtsseitigen Verzweigungskanal (11c) hin zu sprühen.

17. Brennkraftmaschine (1) nach Anspruch 14 oder 15, dadurch gekennzeichnet, daß das Kraftstoffeinspritzventil (16) in der ungefähren Mitte des Lufteinlaßkanals (11) angeordnet ist und eine solche Form besitzt, daß Kraftstoff zu dem linksseitigen (11b) und rechtsseitigen Verzweigungskanal (11c), allerdings nicht zu dem mittleren Verzweigungskanal (11a) hin, gesprüht wird.

## Revendications

1. Moteur à combustion interne (1) du type à quatre temps, comprenant :
un bloc-cylindres (2) comportant au moins un alésage (2a) et au moins une culasse (3) fixée audit bloc-cylindres (2) au moyen d'une pluralité de boulons de culasse (6),
au moins trois ouvertures pour soupapes d'admission d'air (5a, 5b, 5c) formées dans ladite culasse (3) et dont une, s'agissant d'une ouverture centrale pour soupape d'admission d'air (5a), reposant en étant sensiblement disposée sur un plan contenant l'axe (A) dudit alésage (2a) et s'étendant perpendiculairement à l'axe de rotation d'un arbre à cames d'admission d'air (10a), et les autres ouvertures sont disposées sur les deux côtés dudit plan en regardant le long de la direction de l'axe de cylindre (A) en tant qu'ouvertures pour soupapes d'admission d'air gauche et droite (5b, 5c),
une pluralité d'ouvertures pour soupapes d'échappement (5d, 5e) formées dans ladite culasse (3),
au moins trois soupapes d'admission d'air (7a, 7b, 7c) correspondant auxdites ouvertures pour soupapes d'admission d'air (5a, 5b, 5c) et supportées, pour un mouvement d'aller-retour le long de lignes axiales respectives (B1, B2), par ladite culasse (3) et définissant un premier angle (θ1) entre ladite ligne axiale (B1) de la soupape d'admission d'air centrale (7a) et l'axe (A) de l'alésage (2a) et un second angle (θ2) entre les axes (B2) des soupapes d'admission d'air gauche et droite (7b, 7c), et ledit axe (A) de l'alésage (2a),
une soupape d'injection de carburant (16) comportant une buse d'injection (16a),
une pluralité de soupapes d'échappement (7d, 7e) supportées, pour un mouvement d'aller-retour, par ladite culasse (3) et entraînées par un arbre à cames d'échappement (10b), et un passage d'admission d'air (11) comprenant une pluralité de passages de branchement (11a, 11b, 11c),
lesdits passages de branchement (11a, 11b, 11c) définissent un passage principal et un passage secondaire et ledit passage secondaire peut être fermé par une soupape (13, 15a, 15b) disposée dans ledit passage d'admission d'air (11),
caractérisé en ce que
un angle (θ4) sous-tendu entre le plafond du passage de branchement d'admission (11c) menant à l'ouverture pour soupape latérale (5c) dudit passage principal et l'axe de cylindre (A) est inférieur à un angle (θ3) sous-tendu entre le plafond du passage de branchement d'admission (11b) menant à l'ouverture pour soupape latérale (5b) dudit passage secondaire et l'axe (A), et
dans lequel la hauteur (S₁, S₂) d'une zone de col coudée du passage de branchement d'admission (11c, 11b) à l'ouverture pour soupape d'admission est plus faible pour l'ouverture pour soupape latérale (5c) du passage principal que pour l'ouverture pour soupape latérale (5b) du passage secondaire.

2. Moteur à combustion interne (1) selon la revendication 1, caractérisé en ce que ledit passage secondaire comprend un passage de branchement central (11a) menant à l'ouverture pour soupape centrale (5a).

3. Moteur à combustion interne (1) selon la revendication 2, caractérisé en ce qu'une première paroi de cloisonnement (11d) est prévue entre le passage de branchement central (11a) et le passage de branchement gauche (11b), les deux formant ledit passage secondaire, ladite première paroi de cloisonnement (11d) commençant depuis le côté inférieur de ladite culasse (3) et s'étendant jusqu'au voisinage de ladite soupape (13, 15a, 15b) et en ce qu'une seconde paroi de cloisonnement (11e) est prévue entre le passage de branchement central (11a) et le passage de branchement droit (11c) définissant le passage principal, ladite seconde paroi de cloisonnement (11e) depuis le côté inférieur de ladite culasse (3) et s'étendant jusqu'au voisinage de ladite soupape (13, 15a, 15b).

4. Moteur à combustion interne (1) selon la revendication 3, caractérisé en ce qu'une troisième paroi de cloisonnement (14a) est prévue, qui est une prolongation de ladite seconde paroi de cloisonnement (11e), en amont de ladite soupape (13, 15a, 15b).

5. Moteur à combustion interne (1) selon au moins l'une des revendications précédentes 1 à 4, caractérisé en ce que ladite soupape d'injection de carburant (16) est disposée de telle sorte que ladite buse d'injection (16a) pointe à une rainure de guidage de carburant (11h) ménagée dans le plafond dudit passage de branchement droit (11c) menant à l'ouverture pour soupape droite (5c) qui est l'ouverture pour soupape du passage principal.

6. Moteur à combustion interne (1) selon au moins l'une des revendications précédentes 3 à 5, caractérisé en ce qu'un orifice de dérivation (11g) est prévu dans ladite seconde paroi de cloisonnement (11e).

7. Moteur à combustion interne (1) selon la revendication 1 ou 2, caractérisé en ce qu'une première paroi de cloisonnement (11d) est prévue entre le passage de branchement central (11a) et le passage de branchement gauche (11b), les deux formant ledit passage secondaire, ladite première paroi de cloisonnement (11d) commençant depuis le côté inférieur de ladite culasse (3) et s'étendant approximativement jusqu'à la paroi intérieure dudit alésage (2) et en ce qu'une seconde paroi de cloisonnement (11e) est prévue entre le passage de branchement central (11a) et le passage de branchement droit (11c) définissant ledit passage principal, ladite seconde paroi de cloisonnement (11e) commençant depuis le côté inférieur de ladite culasse (3) et s'étendant jusqu'au voisinage de ladite soupape (13, 15a, 15b).

8. Moteur à combustion interne (1) selon la revendication 7, caractérisé en ce qu'une troisième paroi de cloisonnement (14a) est prévue, qui est une prolongation de ladite seconde paroi de cloisonnement (11e), en amont de ladite soupape (13, 15a, 15b).

9. Moteur à combustion interne (1) selon la revendication 7 ou 8, caractérisé en ce que ladite soupape d'injection de carburant (16) est dirigée vers ledit passage de branchement droit (11c) menant à l'ouverture pour soupape (5c) du passage principal.

10. Moteur à combustion interne (1) selon la revendication 1, caractérisé en ce qu'un passage de branchement central (11a) et le passage de branchement gauche (11b) forment ledit passage secondaire tandis que le passage de branchement droit (11c) forme ledit passage secondaire.

11. Moteur à combustion interne (1) selon la revendication 10, caractérisé en ce qu'une première paroi de cloisonnement (11d) est prévue entre le passage de branchement central (11a) et le passage de branchement gauche (11b), ladite première paroi de cloisonnement (11d) commençant depuis le côté inférieur de ladite culasse (3) et s'étendant approximativement jusqu'à la paroi intérieure dudit alésage (2) et en ce qu'une seconde paroi de cloisonnement (11e) est prévue entre ledit passage de branchement central (11a) et le passage de branchement droit (11c), ladite seconde paroi de cloisonnement (11e) commençant depuis le côté inférieur de ladite culasse (3) et s'étendant jusqu'au voisinage de ladite soupape (13, 15a, 15b).

12. Moteur à combustion interne (1) selon la revendication 10 ou 11, caractérisé en ce que ladite soupape d'injection de carburant (16) est dirigée vers le passage principal.

13. Moteur à combustion interne (1) selon au moins l'une des revendications précédentes 10 à 12, caractérisé en ce qu'une ouverture (11h) est prévue dans ladite seconde paroi de cloisonnement (11e) de façon adjacente à ladite soupape (13, 15b, 15c).

14. Moteur à combustion interne (1) selon la revendication 1 ou 2, caractérisé en ce que lesdits passages de branchement (11a, 11b, 11c) sont séparés par des parois de cloisonnement commençant depuis le côté inférieur de ladite culasse (3) et s'étendant approximativement jusqu'à la paroi intérieure dudit alésage (2a).

15. Moteur à combustion interne (1) selon la revendication 14, caractérisé en ce qu'un plateau porte-soupape (15d) de ladite soupape (13, 15b) présente une forme ovale correspondant à la forme dudit passage d'admission d'air (11) et en ce que ledit plateau porte-soupape (15d) comprend une encoche (15e) adjacente audit passage de branchement droit (11c).

16. Moteur à combustion interne (1) selon la revendication 14 ou 15, caractérisé en ce que ladite soupape d'injection de carburant (16) est disposée pour pulvériser le carburant en direction du passage de branchement droit (11c),

17. Moteur à combustion interne (1) selon la revendication 14 ou 15, caractérisé en ce que ladite soupape d'injection de carburant (16) est disposée à peu près au centre dudit passage d'admission d'air (11) et présente une forme telle que le carburant est pulvérisé en direction des passages de branchement gauche (11b) et droit (11c) et non pas en direction du passage de branchement central (11a).
